# EUROPEAN PATENT APPLICATION

(11) **EP 4 202 870 A1**
(43) Date of publication of application: **28.06.2023**
(21) Application number: 22214173.1
(22) Date of filing: 16.12.2022
(51) Int. Cl.: G07B 15/02, G06Q 20/14, G07F 17/24

(54) **PARKING PAYMENT SYSTEM**

(30) Priority: 21.12.2021 IT 202100032000
(71) Applicant: Flowbird Italia Srl, 20139 Milano (IT)
(72) Inventor: MAGGIONI, Vezio, Milano (IT)
(74) Representative: Vanosi, Adelio Valeriano

(57) **Abstract**

A parking payment system (1) comprising a parking meter (2) equipped with payment means (5, 4, 7, 8), a control unit (100), and a communication interface (10); the control unit (100) for the parking meter (2) is configured to interface with at least one external database (D1, D2, D3) to verify (301) the existence of at least one fine or sanction associated with a plate number entered into or acquired (300) by the parking meter.

## Description

### FIELD OF THE INVENTION

The present invention relates to a parking payment device, also known as a parking meter and more generally to an automatic ticket issuing device for paying for services linked to mobility and public administration.

The parking payment device also allows the user to manage the payment of fines and sanctions, in full compliance with the rules currently applied for payments to public administration authorities.

### BACKGROUND ART

There are devices commonly known in the art for the payment of parking tickets, which are commonly referred to as 'parking meters'. These may be located near parking areas (car parks) or public or private transport stops, and at railway stations, bus stations, etc.

Essentially, a user obtains a parking ticket from an automatic device (parking meter) by paying the fee using physical or electronic money.

If the fee has not been paid or the physical or digital document (ticket) has expired, the user may be sanctioned, in compliance with the provisions of the laws in force (the highway code first and foremost) by the parties tasked with monitoring the parking areas.

In addition to the purchase of parking tickets, some devices already allow the purchase of travel tickets and other services linked to mobility ('gentle mobility', shared mobility, etc.)

### SUMMARY OF THE INVENTION

The object of the present invention is to provide a parking payment device which is improved compared with the prior art.

A further object of the invention is to provide a parking payment device which also allows payment of a sanction (fine) according to the provisions of the law in force and in full compliance with certified digital payments.

This and other objects are achieved by means of a ticket payment device according to the technical teachings of the claims annexed hereto.

### BRIEF DESCRIPTION OF THE FIGURES

Further features and advantages of the innovation will become clearer in the description of a preferred but not exclusive embodiment of the parking payment device, illustrated - by way of a non-limiting example - in the drawings annexed hereto, in which:

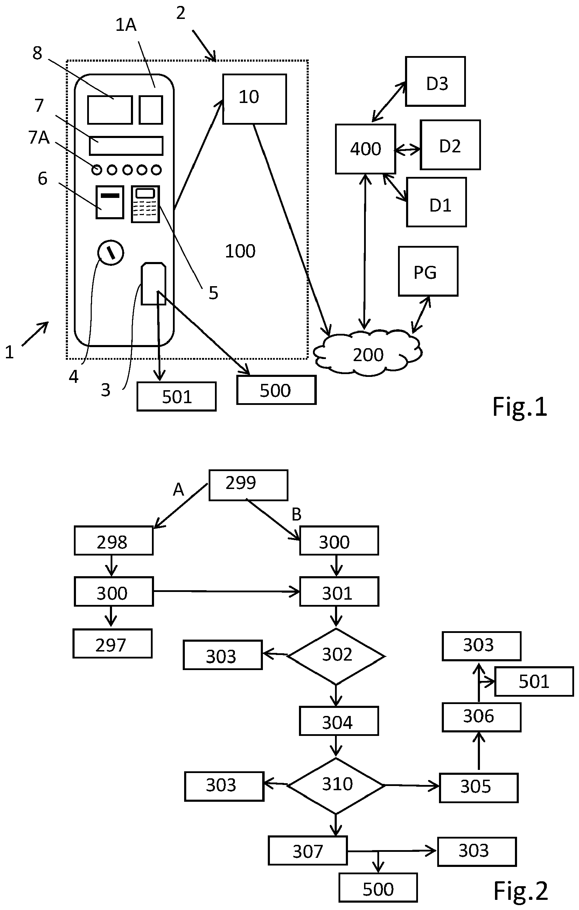

Figure 1 is a simplified, schematic view of a parking payment device according to the present invention; and
Figure 2 is a schematic representation of a method employed by the device in Figure 1.

### DETAILED DESCRIPTION OF THE INVENTION

With reference to the aforesaid figures, a parking payment device is shown which is denoted overall by reference number 1.

The said device comprises a parking payment machine (terminal) which is denoted overall by reference number 2.

The payment terminal or parking meter 2 comprises a frame 1A fixed firmly to the ground, for example on a pavement or at the side of the road near parking areas for which payment is due.

After parking the car (or other vehicle) in the parking area, a user goes to the parking meter 2 and proceeds to make the payment for the parking in advance, inserting the amount due, into the coin collection mechanism 4 (or using digital money or a credit/debit card). After inserting the desired amount, the user presses a button 7A and a parking payment slip is printed (via an appropriate printer 3) stating the 'end' time of the paid parking. The slip must be displayed on the car dashboard, where it can be checked if necessary.

The amounts paid for parking are appropriately stored by real-time transferral thereof to the control and management system, thanks to which they can be checked at regular intervals by the proprietor's administration staff both visually and digitally through verification systems connected in real time to those responsible for managing the parking areas (local council, transport company, concession holder, etc.).

Advantageously, the machine 2 can also feature a display 8 (possibly of the touch-screen type) for viewing data relating to parking and the mobility services available.

A physical keyboard 7 may also be featured for entering, for example, the vehicle registration number (plate number) or other relevant information. The keyboard 7 can obviously be integrated into the touchscreen.

The parking payment machine 2 can also feature payment means other than the coin collection mechanism 4.

For example, a payment card reader 6 may be envisaged, which may also be wireless, with which a conventional numeric keypad 5 is optionally coupled for entering the card PIN (if necessary). Obviously, the keypad 5 can feature its own operating display.

For bank credit/debit card payments (or digital/virtual money), the machine 2 is equipped with a network communication terminal 10, for connection to the internet 200 (or to another proprietary data network), which is designed to connect a machine control unit 100 with the said network. Preferably, the communication terminal 10 is a 2G/3G/4G (or in the future 5G) network terminal but it can comprise a network interface via cable, WiFi, a data interface via a mobile telephone network, or other known data communication system, as the case may be.

More specifically, when it is necessary to pay for parking, after reading the data on the payment card via the reader 6 (possibly wirelessly) and confirming the payment amount, the control unit 100 sends the data necessary for the payment (via the terminal 10) to the bank data processor (for example SIA S.p.A, connected via internet 200). The bank data processor, using a collection service provider, then credits the amount paid for the parking to the bank current account.

According to the present invention, the parking payment machine 2 allows users to (actively) check 301 the existence of a sanction or fine associated with a vehicle plate number 300 (actively) inserted by the user or acquired from the user while paying a parking fee, and subsequently to pay it 305 or to obtain a document 307 necessary for the payment of the said fine (for example through the PAGOPA system for payments to public administration authorities), thereby scheduling a payment.

Essentially, a user can directly access a menu 299 using the parking meter 2. From the menu, the user can choose whether to proceed by paying for parking A (or other services provided by the parking meter, such as, for example, the purchase of travel tickets, etc.) or directly access a section B dedicated to the management of fines. In this case, the user is required to enter 300 (on the keyboard or on the touch-screen) the vehicle plate number.

At this point the control unit 100 for the parking meter 2 accesses the internet 200 (or any suitable network 200, which may also be proprietary or internal), for example through the communication interface 10.

The network 200 is connected to a server 400 (for example, a Cloud server) which verifies 301 whether there are any fines associated with the plate number entered.

The server 400 can be interfaced with one or with a plurality of databases D1, D2, D3 if there are any sanctions associated with the plate number entered.

For example, the databases may be those held by the local police force of one or more local councils, by local transport companies (to which some councils assign the issue and collection of fines for parking in certain areas, for example those marked with blue lines, yellow lines, etc.), by the state police, the traffic police, the Italian *carabinieri* (military police) force, the Italian *Guardia di finanza* (tax police) force, and in general any entity authorised or delegated to issue fines or sanctions associated with a vehicle and the parking thereof.

The outcome 302 of the check 301 may be negative, i.e. there is no fine associated with the plate entered.

In this case, the parking meter 2 notifies the user (for example, via the display 8) that there are no fines and the procedure ends 303.

If, on the other hand, the outcome 302 of the check 301 is positive, i.e. that at least one fine associated with the plate number entered has been found in the databases D1, D2, D3 etc., the user is notified 304 (for example, again, via the display 8) of the existence of a fine, together with the details thereof and the amount due.

At this point the user is prompted 310 as to the action to take. It is possible not to process the fine and therefore to exit 303 the procedure.

Alternatively, it is possible to receive a slip 307 with which to pay the said fine.

In this case, the control unit 100 provides for the 'management' of the fine by printing a slip for the payment thereof.

The payment slip may be, for example, a unique code or a QR code associated with the PagoPA payment system. A ticket 500 with the QR code summarising the details can be printed (with the printer 3) or simply viewed on the display 8 to enable the user to proceed directly with the payment, for example via their own banking system (e.g. directly using their credit/debit cards or via an application on their mobile phone). The procedure is then terminated 303.

The fine can also be paid directly 305 via the parking meter 2, using the same payment instruments already present in the said parking meter, therefore, for example, the card reader 6 and the keypad (using, therefore, electronic or digital money).

Payment may also be made directly in cash using the coin collection mechanism 4, which can obviously comprise a banknote reader.

Therefore, with one of the methods outlined above, the parking meter acquires 306 the amount due for the fine or sanction.

Once the payment has been made or certified 'directly' via the parking meter 2, a fine payment receipt or settlement slip 501 can be issued.

In this case, the parking meter can also verify that the fine has effectively been cancelled from the databases following payment. The procedure is then terminated 303.

Obviously, the operations consisting of the verification and generation of a payment slip to allow the direct payment of the fine may be subject to the payment of 'commission' by the user directly to the parking meter service provider.

During a normal parking payment procedure, the parking meter can also envisage the verification (and subsequent notification to the user) of the 'presence' of a fine or sanction associated with a plate number.

For example, in a parking payment menu 298, following entry 300 of the plate number (that may be directly performed by the user), it is possible for the control unit 100 to automatically perform a verification routine 301 to notify the user of any fines associated with the plate number entered. In this case, the procedure in step 302 may be performed, which asks whether or not the user wishes to process the fine.

After this verification, the parking payment operation can proceed as usual, according to step 297.

As already mentioned, the parking meter 2 is mainly dedicated to paying for parking, but obviously the control unit can, as already known, also envisage payment of travel passes (tickets) or the renewal thereof, etc.

To complete the description, it should be stressed that the parking meter, may feature a physical keyboard 7 (in addition to the buttons 7A) for manual entering (by the end user), for example, the plate number and/or user identification data (in compliance with the provisions of the GDPR) or other data which is necessary for payment of the fine or sanction, or data which is useful for the services offered by the parking meter, etc. The keyboard 7 can obviously be integrated into the touchscreen.

The parking payment device 1 can also feature payment means other than the coin collection mechanism 4 or banknote reader, which are used to collect the physical money.

For example, as already mentioned, a payment card reader 6 may be featured (Credit: Visa, Mastercard, American Express, Debit: Bancomat, Fastpay, Maestro, Postepay, etc.) including readers for which no contact is required (contactless) and/or with proximity technology (NFC), which may also be coupled with a specific numeric keypad 5 with which to key in the card PIN (where necessary). Obviously, the keypad 5 may have its own operating display. In this way, it is possible to make a payment with virtual money.

For credit card payments, in addition to the specific card reader 6, the parking payment device 1 may also be equipped with a network communication terminal 10, for connection to the internet (or to another proprietary data network), which is designed to connect a machine control unit with the network. Preferably, the communication terminal is a 2G/3G/4G (or in the future 5G) network terminal, but it can comprise a network interface via cable, radio (for example WiFi), a data interface via a mobile telephone network, or other known data communication system, as the case may be.

More specifically, when it is necessary to pay for parking, after reading the data on the payment card via the reader 6 (possibly wirelessly) and confirming the payment amount, the control unit 100 sends the data necessary for the payment (via the terminal 10) to the bank data processor (for example SIA S.p.A.). The bank data processor, using a collection service provider, then credits the amount due.

The procedure takes place both if the user wishes to pay a fine or simply for parking.

The network connection 10 also allows remote management and total control of the device 1 by means of its own integrated control unit, which manages every operation.

The device 1 can also be configured to allow payment for other services in addition to the services described above. For example, it can allow payment for parking, of electricity bills, or for any other type of service.

The device is particularity useful as today more and more cities are adopting some Scan-Car control systems that automatically issue a fine (for example for parking).

When a Scan-car issue a fine, no notice or receipts are left on the car, and the user can't be aware of having received a fine, since a formal receipt is sent to the user address.

Therefore, the system may relate to fines issued by Scan-Car, or by any other system that do not provide for a physical warning (eg. a physical receipt) immediately left to the user (e.g. on the car) for him to know that a fine was issued.

Therefore, a user cannot know in advance if a fine was issued. Think about a tourist staying in a city for just few days, or a foreigner visiting the city etc.

The present system gives to a user a chance to check if a fine was issued, by simply inserting in the parking meter its plate number.

After this, he could:
1) at first, be aware of a possible received fine
2) the user can decide to pay a penalty (directly through the parking meter 2 to cancel the fine, or pay an administrative fine (tariff recovery if allowed) or other redemption systems.

The whole system is possibly based on HUB solution as it may integrate data from all different digital applications that contribute to the control.

Moreover, it should be noticed that the parking meter is possible not connected to any specific local verification system (whether carried out with fixed cameras or with sensors).

The parking meter, through its interface system, accesses different control systems through API interfaces simultaneously and in real time, providing immediate response primarily on the fact that a fine has been formally issued (e.g. by police, local police, local authority), and secondly if this has been issued, allows payment with notification and online cancellation of the same.

The integration of digital payment methods (APP) is seen exclusively as an alternative solution to paying with bank cards or coins on the parking meter 2 terminal.

Various embodiments of the innovation have been disclosed herein, but further embodiments may also be conceived using the same innovative concept.

## Claims

1. Parking payment system (1) comprising a parking meter (2) equipped with payment means (5, 4, 7, 8), a control unit (100) and a communication interface (10), **characterized by** the fact that the control unit (100) of the parking meter (2) is configured to interface with at least one external database (D1, D2, D3) for the verification (301) of the existence of at least one fine or sanction associated with a plate number entered from the user or acquired (300) by the parking meter from the user, the parking meter providing means for displaying (8) and means for printing (3) a receipt relating to said fine.

2. System according to the previous claim, in which the control unit (100) interfaces with the external database (D1, D2, D3) through said communication interface (10) which communicates with a server (400) configured to search in said external database (D1, D2, D3).

3. System according to claim 1, wherein the parking meter (2) comprises a keyboard (7) and/or a touch screen (8) for the user to enter the plate number.

4. Operating method of a parking meter (2), comprising the steps of:
a. acquire (300) a plate number from a user
b. verify (301) the existence of a fine or sanction associated with said plate number
c. notify the user of the existence of a fine associated with the plate number.

5. Method according to the previous claim, in which the verification of the existence of a fine or sanction takes place by querying at least one database (D1, D2, D3) where any unpaid fines associated with said license plate number are stored.

6. Method according to claim 4, in which following notification to the user, the user can choose to:
a. ignore the communication (302), or
b. pay the fine or sanction directly (305) through the parking meter (2), or
c. obtain (307) the printing or display of a certified title (500) to proceed with the payment of the fine or penalty.

7. Method according to claim 6, in which the direct payment of the fine or penalty is made by paying the amount due in cash, or by electronic and / or digital money.

8. Method according to one or more of the preceding claims, in which, during a payment procedure (B) for a parking fee, following the insertion (300) or acquisition of a license plate of a vehicle, the existence of a fine that is notified (302) to the user.
